Europäisches Patentamt

European Patent Office

Office européen des brevets

(11) Publication number: **0 145 159**
**B1**

(12) **EUROPEAN PATENT SPECIFICATION**

(45) Date of publication of patent specification: **01.02.89**

(21) Application number: **84306898.2**

(22) Date of filing: **10.10.84**

(51) Int. Cl.⁴: $H\ 05\ B\ 7/07$, $C\ 22\ B\ 9/20$

(54) **Consumable electrodes for arc melting of zirconium or titanium alloys.**

(30) Priority: **13.10.83 US 541404**

(43) Date of publication of application:
**19.06.85 Bulletin 85/25**

(45) Publication of the grant of the patent:
**01.02.89 Bulletin 89/05**

(84) Designated Contracting States:
**DE FR GB IT SE**

(56) References cited:
**DE-B-1 110 340**
**US-A-3 400 206**
**US-A-3 565 602**

(73) Proprietor: **WESTINGHOUSE ELECTRIC CORPORATION**
**Westinghouse Building Gateway Center**
**Pittsburgh Pennsylvania 15235 (US)**

(72) Inventor: **Weber, Sylvester Andrew**
**47 White Barn Drive**
**Pleasant View Utah (US)**

(74) Representative: **van Berlyn, Ronald Gilbert**
**23, Centre Heights**
**London, NW3 6JG (GB)**

Courier Press, Leamington Spa, England.

## Description

This invention relates to consumable electrodes for use in arc melting of Zr or Ti alloys.

Producing homogeneous alloys of high temperature reactive metals such as titanium and zirconium has presented problems. U.S. Patent Specification US—A—3,565,602 (Konisi et al) discusses the problem of adding constituents with different melting points and several prior art methods of dealing with these problems. The greater the temperature difference of melting points the more difficult these problems become. Tin is commonly added as an alloying constituent of zirconium alloys and is an example of a low melting point constituent, the introduction of which presents significant difficulties. While alloying constituents are often added using master alloys, master alloys of zirconium and titanium have a tendency to be pyrophoric and are prone to contribute undesirable phases such as nitrides to the alloys. Further, the master alloy is still relatively low melting and resistance heating of the electrode tends to melt the master alloy away from the arc, resulting in an inhomogeneous product. To control the amount of tin during arc melting it is common practice to contain the unalloyed tin within a tight packet of some form within the electrode.

Attempts have also been made to reduce the electrode resistance to minimize resistance heating of the electrode during melting by, for example, providing multiple welding beads longitudinally along the electrode. This technique is time consuming and not totally effective.

An aim of the present invention is to provide an electrode for controllably and economically adding a low melting constituent (such as tin or aluminum) to a zirconium or titanium.

Accordingly, the present invention resides in a consumable electrode for use in arc melting of Zr or Ti alloys which are to contain a low melting point alloying constituent, characterized in that said electrode comprises: a low resistance spar extending substantially the length of said electrode, said spar being substantially free of unalloyed low melting point alloy constituent; and an external member containing unalloyed low melting point constituent and compacted granules principally comprising Zr or Ti, said member being attached to said spar in a manner to provide a relatively high resistance of said external member in an axial direction of the electrode, whereby during operation, resistance heating of said external member away from the arc is minimized and thus premature melting of the unalloyed low melting point alloying constituent is generally avoided.

As used herein, the term "unalloyed low melting point alloying constituent" is used to mean an alloying constituent with a melting point of at least 1000°F lower melting point than the zirconium or titanium which is the principal constituent of the alloy and preferably a single element (such as tin) but possibly a low melting master alloy.

In order that the invention can be more clearly understood, a convenient embodiment thereof will now be described, by way of example, with reference to the accompanying drawing which is a perspective view of a spar type electrode with cylindrical half segments containing unalloyed low melting point alloy constituents spaced along and welded to both sides of a low resistance spar member, the spar member being substantially free of unalloyed low melting point alloy constituents.

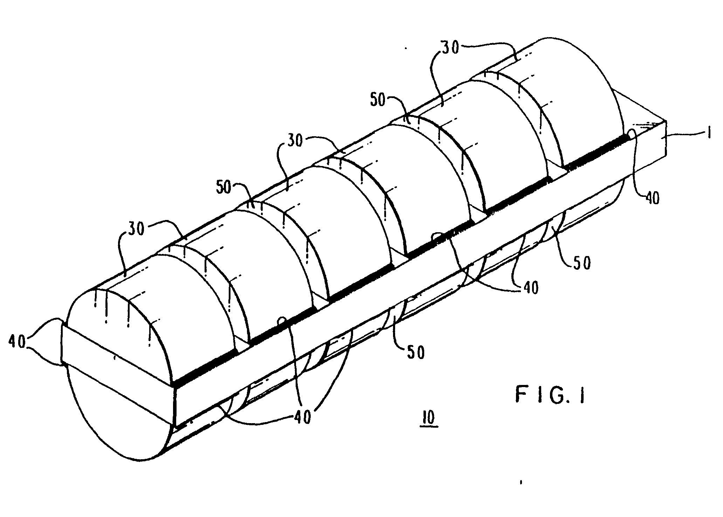

Figure 1 shows a zirconium or zirconium alloy spar 1 having a 3-inch by 14-inch rectangular cross section and a length of approximately 200 inches. This spar forms the core of the electrode 10. Half-moon shaped segments 30 contain compacted granules of zirconium or zirconium alloy and also contain the unalloyed low melting point constituent or constituents (e.g., tin or tin and aluminum). The segments are shown welded 40 on either side of the spar 1 and are spaced along the length of the electrode 10 according to manufacturing requirements. The spar 1 may be built up from sheet or tube scrap or may be forged or rolled from an ingot (while the spar may contain some low melting constituent, it would be in alloyed form). It is critical in this technique that the spar 1 forms a low resistance core. Resistance heating of the electrode 10 in general is reduced by the lower resistance, and local heating around unalloyed tin, for example, is reduced as current through the external members (here the moon-shaped segments) is minimized, especially in the portions of the electrode away from the arc. Thus melt-out of unalloyed low melting point alloy constituents is minimized. In addition, weld time of fabrication of the electrode is minimized, since only four longitudinal welds are required to produce an electrode with sufficient strength for arc melting. The external members can, of course, be mechanically attached by methods other than welding.

The sponge or scrap containing moon-shaped segments shown in Figure 1 are convenient, but the shape of these segments is not critical (however, the unalloyed low melting constituent is to be generally contained within the external member, rather than being on the surface where it might, for example, be melted by radiation from the arc). Further, the gaps 50 between adjacent segments 30 are convenient, but not required. It is preferable, however, than multiple segments be used, with surfaces between adjacent segments generally perpendicular to the longitudinal axis of the electrode as this provides for greatly increased resistance along the longitudinal axis through the segments and minimizes current (and thus resistance heating of the members containing the low melting point constituents). Again, current through those segments away from the arc is undesirable as it can lead to local melting (away from the arc) of the unalloyed low melting point alloying constituents or master alloys containing those alloying constituents.

In order to provide a spar 1 having sufficient structural strength and low resistance, the spar is preferably fabricated by rolling or forging and preferably has a generally rectangular slab configuration when fabricated as illustrated by Figure 1. This rectangular slab configuration is convenient for attaching segments thereto. The half-moon segments 30 (cylindrical sections cut in two along the axis) can conveniently be prepared by pressing sponge granules or scrap into a disc-shape and then cutting the disc in two.

Both the spar and the external member are to be fabricated from relatively large pieces of metal (e.g. not from powder). The spar can be forged or rolled using granules ("granules", as used herein, means pieces with a smallest dimension of generally greater than 1/8 inch, and typically dimensions in the 1/4 to 3/4 inch range). The external member is to contain compacted granules (the granules being principally Ti or Zr).

The segments could, of course, be of different shapes, including rectangular members whose resistance is relatively high due to being compacted only to a relatively low density (rather than having high resistance provided by gaps generally perpendicular to the longitudinal axis of the electrode).

While the invention has been described generally using tin as the low melting point alloying constituent to be added to zirconium, it can be seen that this technique is useful for other zirconium alloying constituent such as aluminum and also for low melting point alloying constituents of titanium (such as aluminum).

## Claims

1. A consumable electrode (10) for use in arc melting of Zr of Ti alloys which are to contain a low melting point alloying constituent, characterized in that said electrode (10) comprises: a low resistance spar (1) extending substantially the length of said electrode (10), said spar (1) being substantially free of unalloyed low melting point alloying constituent; and an external member (30) containing unalloyed low melting point constituent and compacted granules principally comprising Zr or Ti, said member (30) being attached to said spar (1) in a manner to provide a relatively high resistance of said external member (30) in an axial direction of the electrode (10), whereby during operation, resistance heating of said external member (30) away from the arc is minimized and thus premature melting of the unalloyed low melting point alloying constituent is generally avoided.

2. An electrode according to claim 1, characterized in that multiple segments (30) of external members are attached to said span (1).

3. An electrode according to claim 2, characterized in that the multiple segments (30) are positioned along the longitudinal axis of the electrode (10) with surfaces between adjacent segments (30) being generally perpendicular to the longitudinal axis of the electrode (10).

4. An electrode according to claim 3, characterized in that there are gaps (50) between adjacent segments (30).

5. An electrode according to any of claims 1 to 4, characterized in that the spar (1) is fabricated by rolling or forging into a generally rectangular slab.

6. An electrode according to any of the preceding claims, characterized in that the spar (1) principally comprises Zr and the unalloyed low melting point alloying constituent comprises tin.

7. An electrode according to any of claims 1 to 5, characterized in that the spar (1) principally comprises Ti and said unalloyed low melting point alloying constituent comprises aluminium.

## Patentansprüche

1. Eine verbrauchbare Elektrode (10) zur Verwendung in der Lichtbogenschmelze von Zr- oder Ti-Legierungen, die einen Niedrigschmelzpunkt-Legierungsbestandteil enthalten, dadurch gekennzeichnet, daß die Elektrode (10) folgendes umfaßt: einen Ausleger 1, der sich im wesentlichen über die Länge der Elektrode (10) erstreckt, wobei der Ausleger (1) im wesentlichen frei von nicht legiertem Niedrigschmelzpunkt-Legierungsbestandteil ist; und ein externes Glied (30), das unlegierten Niedrigschmelzpunktbestandteil und kompaktierte Körner enthält, die prinzipiell Zr oder Ti umfassen, wobei das Glied (30) an dem Ausleger (1) in einer solcher Weise befestigt ist, daß sich ein verhältnismäßig hoher Widerstand des externen Gliedes (30) in einer axialen Richtung der Elektrode (10) ergibt, wodurch während des Betriebes Widerstandserhitzung des externene Gliedes (30) weg von dem Lichtbogen minimiert und somit ein vorzeitiges Schmelzen des unlegierten Niedrigschmelzpunkt-Legierungsbestandteiles im wesentlichen vermieden wird.

2. Eine Elektrode nach Anspruch 1, dadurch gekennzeichnet, daß Vielfachsegmente (30) des externen Gliedes an dem Ausleger (1) befestigt sind.

3. Eine Elektrode nach Anspruch 2, dadurch gekennzeichnet, daß die Vielfachsegmente (30) entlang der Längsachse der Elektrode (10) angeordnet sind, wobei Oberflächen zwischen angrenzenden Segmenten (30) im wesentlichen senkrecht zur Längsachse der Elektrode (10) liegen.

4. Eine Elektrode gemäß Anspruch 3, dadurch gekennzeichnet, daß es Spalte (50) zwischen angrenzenden Segmenten (30) gibt.

5. Eine Elektrode nach einem der Ansprüche 1 bis 4, dadurch gekennzeichnet, daß der Ausleger (1) durch Walzen oder Schmieden zu einer im wesentlichen rechteckigen Bramme hergestellt wird.

6. Eine Elektrode nach einem der vorhergehenden Ansprüche, dadurch gekennzeichnet, daß der Ausleger (1) prinzipiell Zr umfaßt und daß der unlegierte Niedrigschmelzpunkt-Legierungsbestandteil Zinn umfaßt.

7. Eine Elektrode nach einem der Ansprüche 1 bis 5, dadurch gekennzeichnet, daß der Ausleger (1) prinzipiell Ti umfaßt und daß der nichtlegierte Niedrigschmelzpunkt-Legierungsbestandteil Aluminium umfaßt.

**Revendications**

1. Electrode consommable (10) destinée à être utilisée dans la fusion à l'arc d'alliages de Zirconium ou Titane devant contenir un élément constitutif d'alliage à bas point de fusion, caractérisée en ce que cette électrode (10) comprend: unfaisceau (1) à faible résistance s'étendant essentiellement suivant la longueur de l'électrode (10), ce faisceau (1) étant complètement exempt d'éléments constitutifs d'alliage à bas point de fusion non alliés; et un élément extérieur (30) contenant l'élément constitutif à bas point de fusion non allié et des granulés compactés constitués essentiellement fe Zirconium ou de Titane, cet élément (30) étant fixé au poteau (1) de manière à donner à l'élément extérieur (30) une résistance relativement élevée dans la direction axiale de l'électrode (10), ce qui permet ainsi, en cours de fonctionnement, de réduire au minimum le chauffage par résistance de l'élément extérieur (30) loin de l'arc, et d'éviter par conséquent d'une façon générale la fusion prématurée de l'élément constitutif d'alliage à bas point de fusion non allié.

2. Electrode selon la revendication 1, caractérisée en ce que des segments multiple (30) d'éléments extérieurs sont fixés au poteau (1).

3. Electrode selon la revendication 2, caractérisée en ce que les segments multiples (30) sont placés le long de l'axe longitudinal de l'électrode (10), les surfaces comprises entre éléments (30) adjacents étant généralement perpendiculaires à l'axe longitudinal de l'électrode (10).

4. Electrode selon la revendication 3, caractérisé en ce que des intervalles (50) sont prévus entre segments (30) adjacents.

5. Electrode selon l'une quelconque des revendications 1 à 4, caractérisé en ce que le faisceau (1) est fabriqué par laminage ou forgeage pour lui donner une forme plate généralement rectangulaire.

6. Electrode selon l'une quelconque des revendications précédentes, caractérisée en ce que le faisceau (1) est constitué principalement de Zirconium, et en ce que l'élément constitutif d'alliage à bas point de fusion non allié est constitué par de l'Etain.

7. Electrode selon l'une quelconque des revendications 1 à 5, caractérisée en ce que le faisceau (1) est constitué principalement de Titane, et en ce que l'élément constitutif d'alliage à bas point de fusion non allié est constitué par de l'Aluminium.

FIG. 1

EP 0 145 159 B1